# EUROPEAN PATENT SPECIFICATION

(11) **EP 3 862 128 B1**
(45) Date of publication and mention of the grant of the patent: **31.05.2023**
(21) Application number: 21160278.4
(22) Date of filing: 16.10.2017
(51) Int. Cl.: B23K 26/06, B22F 3/105, B23K 26/067, C21D 9/50, B23K 26/342, B23K 26/082

(54) **METHOD OF CONTROLLING THE COOLING RATE OF A MELT POOL OF A POWDER BED, AND DIRECT METAL LASER MELTING MANUFACTURING SYSTEM WITH IN-LINE LASER SCANNER**
VERFAHREN ZUR STEUERUNG DER KÜHLUNGSRATE EINES SCHMELZBADES EINES PULVERBETTS, UND SYSTEM FÜR DIREKTES METALL-LASERSCHMELZEN MITTELS INLINE-LASERSCANNER
PROCÉDÉ DE CONTROLE DU TAUX DE REFROIDISSEMENT D'UN BAIN DE FUSION D'UN LIT DE POUDRE, ET SYSTÈME DE FABRICATION PAR FUSION DIRECTE DE MÉTAL PAR LASER AVEC UN SCANNER LASER "IN-LINE"

(30) Priority: 21.11.2016 US 201615357386
(43) Date of publication of application: 11.08.2021
(62) Divisional of application: 17791844.8
(73) Proprietor: General Electric Company, Schenectady, NY 12345 (US)
(72) Inventor: Karp, Jason Harris, Niskayuna, NY 12309 (US); Carter, William Thomas, Niskayuna, NY 12309 (US)
(74) Representative: Hafner & Kohl PartmbB

(56) References cited:
- WO-A1-2013/010876
- DE-A1-102011 113 246
- DE-A1-102014 224 738
- JP-A- H0 332 481
- US-A1- 2014 302 247
- US-A1- 2016 184 925

## Description

### BACKGROUND

The present technology relates generally to the use of Direct Metal Laser Melting (DMLM), for use in the fabrication or repair of components, more particularly to a method of controlling the cooling rate of a melt pool of a powder bed, and to a direct metal laser melting manufacturing system according to the preamble of claims 1 and 8 respectively (see for example US 2016/184925 A1).

Additive manufacturing is a technology that enables the "3D-printing" of components of various materials including metals, ceramics and plastics. In additive manufacturing, a part is built in a layer-by-layer manner by leveling metal powder and selectively fusing the powder within a layer using a high-power laser or electron beam. After each layer, more powder is added and the laser patterns the next layer, simultaneously fusing it to the prior layers to fabricate a complete component buried in a powder bed. Additive manufacturing systems and processes are used to fabricate precision three-dimensional components from a digital model.

In making a build in current powder bed systems, a laser beam or electron beam is used to scan a layer of powder to sinter and melt the desired pattern in the layers of the powder bed. For some applications, the build can require days of processing time. One application of DMLM is in the fabrication and repair of airfoils for gas turbine engines for aircraft. The geometries of the airfoils are difficult to form using conventional casting technologies, thus fabrication of the airfoils using a DMLM process or an electron-beam melting process has been proposed. With the layers built upon one another and joined to one another cross-section by cross-section, an airfoil or portion thereof, such as for a repair, with the required geometries, may be produced. The airfoil may require post-processing to provide desired structural characteristics.

Three-dimensional metal part fabrication using the DMLM process generates extremely high temperature gradients and cooling rates that lead to internal part stress and cracking. This problem is particularly prevalent among nickel base superalloys, which retain high strength at high temperature, and are therefore of interest in airfoils. Crack-free part fabrication may be accomplished using heated build platforms, although custom inductive heaters are needed to reach the required temperatures. A second laser can be used in proximity to the melt pool and alter the cooling rate. However, current two-laser configurations require two independent sets of optics and scanners which are costly and challenging to coordinate.

### BRIEF DESCRIPTION

A method of controlling the cooling rate of a melt pool of a powder bed according to a first aspect of the present invention is defined in claim 1, and at least comprises directing a first laser beam on the powder bed to form a melt pool; coaxially aligning a second laser beam with the first laser beam; and laterally offsetting a focus spot of the second laser beam with respect to the melt pool, wherein the second laser beam heats but does not melt powder within the focus spot.

A direct metal laser melting manufacturing system according to a second aspect of the present invention is defined in claim 8, and at least comprises at least one laser source to generate a first laser beam and a second laser beam; a reflector tiltable about two axes and configured to reflect the second laser beam; a beam combiner to pass the first laser beam and reflect the second laser beam reflected from the reflector; an optical system configured to coaxially align the first and second laser beams and direct the first and second laser beams to a powder bed, wherein the first laser beam forms a melt pool in the powder bed; a controller to tilt the reflector to laterally offset a focus spot of the second laser beam with respect to the melt pool, wherein the second laser beam heats but does not melt powder within the focus spot.

### DRAWINGS

These and other features, aspects, and advantages of the present technology will become better understood when the following detailed description is read with reference to the accompanying drawings in which like characters represent like parts throughout the drawings, wherein:
FIG. 1 schematically illustrates an in-line laser scanner to control cooling rates of direct metal laser melting additive manufacturing;
FIG. 2 schematically illustrates in-line laser scanning to control cooling rates of direct metal laser melting additive manufacturing;
FIG. 3 schematically illustrates a relationship between two laser spots or between two conditions of a single laser spot during direct metal laser melting manufacturing; and
FIG. 4 schematically illustrates a pattern that a single laser spot or multiple laser spots may follow during direct metal laser melting manufacturing.

### DETAILED DESCRIPTION

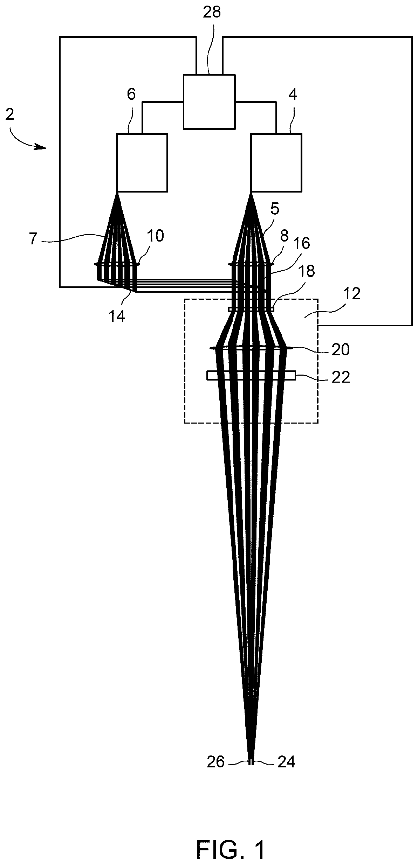

Referring to FIG. 1, an inline scanner system 2 to control cooling rates of DMI,M manufacturing processes comprises a first laser source 4 and a second laser source 6. The first laser source 4 provides a first laser beam 5 and the second laser source 6 provides a second laser beam 7. The first laser beam 5 may be referred to as a melt pool laser beam or the primary welding laser beam and the second laser beam 7 may be referred to as a heating laser beam. The inline scanner system 2 may further comprise a first lens 8 for the first laser beam 5 and a second lens 10 for the second laser beam 7. A two axes tip/tilt reflector, or mirror, 14 directs the second laser beam 7 to a beam combiner 16. The reflector, or mirror, 14 may be piezo-actuated. It should be appreciated that the reflector 14 may be a MEMS mirror (electrostatic) or acousto-optic (diffractive) element or an electro-optical deflector. It should be further appreciated that the reflector 14 may also be a galvo scanner (rotational motor) behind the beam combiner 16. The first laser beam 5 passes through the beam combiner 16 and the second laser beam 7 is reflected by the beam combiner 16.

The second laser beam 7 is coaxially aligned to the first laser beam 5 by reflecting off the tip/tilt reflector 14 and the beam combiner 16. The tip/tilt reflector 14 can alter a collimated beam path of the second laser beam 7 by a few tenths of a degree at several kHz (i.e. on the order of 0.1°). The beam combiner 16 may be a dichroic beam combiner and pass the first laser beam 5 while reflecting the second laser beam 7 for heating. Dichroic beam combiners are appropriate if the first and second laser sources 4, 6 are of differing wavelengths. A polarization-dependent beam combiner may be used if the first and second laser sources 4, 6 are of the same wavelength and have orthogonal polarizations. The two coaxial laser beams 5, 7 travel through a shared optical and scanner system 12 that focuses and directs the first laser spot 24 (from the first laser beam 5) and the second laser spot 26 (from the second laser beam 7) to a powder bed using first and second focal length lenses 18, 20 and a galvanometer scanning head 22.

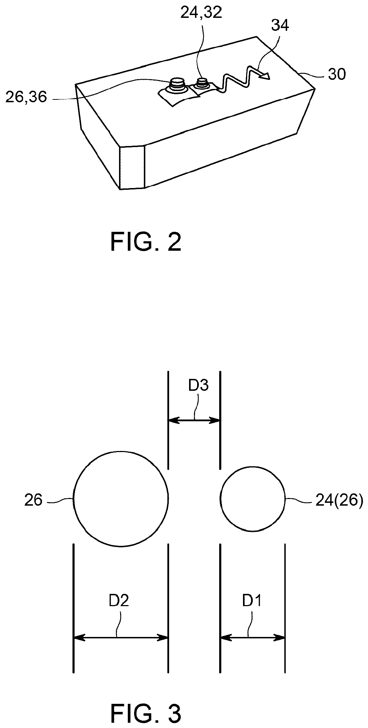

Small tilt angles of the reflector 14 provide lateral offsets of the focus spot 26 with respect to the welding, or melt, pool 32 location in the powder bed 30 formed by the first laser spot 24, and a controlled cooling zone 36 that is formed by the second laser spot 26, as shown in FIG. 2. It should be appreciated that the controlled thermal zone 36 may follow or lead the melt pool 32 along the pattern 34. In the case of the controlled cooling zone 36 leading the melt pool 32, the second laser spot 26 is used to preheat the powder prior to melting. In the case of the controlled cooling zone 36 trailing the melt pool 32, the second laser spot 26 is used to control the solidification of the powder in the melt pool 32. In either case, the added heat leads to substantial reductions in the cooling rate of the weld pool both during and immediately after solidification.

Referring to FIG. 3, tilt angles as small as 0.1° can offset the secondary spot 26 by a distance D3 up to 1mm due to angular magnification through the long focal length lenses 18, 20 of the shared optical and scanner system 12. Coaxially combining both laser beams 5, 7 creates a local coordinate system centered on the weld pool 32. This eliminates having two coordinate systems which occurs when using two separate but registered scanning heads. The first laser spot 24 may have a first diameter D1 and the second laser spot 26 may have a second diameter D2. The second diameter D2 may be 1-10x the first diameter D1. The power and/or power density of the second laser spot 26 may also be different from the first laser spot 24.

The reflector 14 is dynamically driven at several kHz, which is at least an order of magnitude (i.e. at least 10x) faster than galvanometer scanners, though over a comparatively small range of motion. Fast tilt angle adjustments are used to generate the scanned pattern 34 around the weld pool 32 to create a customized heating pattern in the controlled cooling zone 36 to alter the cooling rate. This pattern 34 leads or follows the melt pool 32. High power lasers used for powder fusion can also be modulated at kHz rates adding the additional opportunity to dynamically change laser power in tandem with the heated area (e.g. pattern 34) around the melt pool 32.

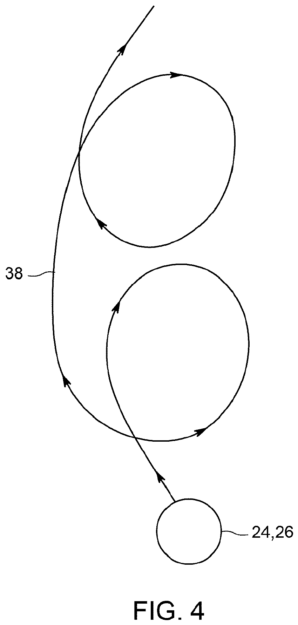

Alternatively, a single laser may be used for both powder fusion and controlled cooling by dynamically tilting the reflector 14 and the galvanometer scanning head 22 in tandem. Laser output power can also be altered at kHz rates and can be tailored in conjunction with mirror tilt. The use of a single laser can be realized by eliminating the first laser, using only the second laser source 6 and reflecting the second laser beam 7 off the reflector 14 in a manner to achieve a controlled cooling zone. For example, the second laser beam 7 may be used to provide the laser spot 26 on the powder bed in a first direction to preheat the powder, and then the laser spot 26 could be moved by tilting the reflector 14 in second direction opposite to the first direction to form the melt pool in the preheated powder. As another example, the second laser spot 26 could be moved in a first direction to form a melt pool, and then the second laser spot could be moved in a second direction opposite to the first direction to control the cooling rate of the melt pool. It should be appreciated that the path of the laser spot 26 in the opposite direction need not be the exact opposite, i.e. a mirror image of the first direction. For example, as shown in FIG. 3, the pattern 34 may have a zigzag configuration and the laser spot 26 may move linearly in the first direction, and follow the pattern 34 in the second direction, or vice versa. It should also be appreciated that the pattern the laser spot 26, or the laser spots 24, 26, may be controlled to follow other patterns, such as a wobble pattern 38 as shown in FIG. 4. It should further be appreciated that the movements of the laser spot must occur at very high rates, essentially oscillating around or about the melt pool.

A controller 28 may control each laser source 4, 6 and each laser beam 5, 7. The controller 28 may also control the reflector 14 and the shared optical and scanner system 12. The controller may control the power, profile, and duration of the first and second laser beams 5, 7, and the rate at which the power of each laser source 4, 6, is reduced when turned off. For a given layer of powder, for example above an airfoil to be repaired, the laser sources 4, 6 are activated to melt the powder in the desired shape per a CAD design, which may be input and/or stored in the controller 28. This process may be repeated as many times as necessary to build up the required region. In the case of the system being used to fabricate a component, e.g. an airfoil, the process is repeated as many times as necessary to build the component. The controller 28 may also control an actuator to move a support of the powder bed 30 downwardly as layers of powder are added and subsequently processed by the laser beams 5, 7. Each layer formed may be, for example, about 1 µm to about 1 mm thick. In the case of repair of an airfoil, each layer may be formed, for example, about 10 - 100 µm thick.

The controller 28 may be a computer processor or other logic-based device, software components (e.g., software applications), and/or a combination of hardware components and software components (e.g., a computer processor or other logic-based device and associated software application, a computer processor, or other logic-based device having hard-wired control instructions, or the like).

The reflector 14 may be controlled by the controller 28 to control the temperature of powder near or adjacent to the melt pool 32 to alter the cooling rate of the melted powder. The controller 28 may also control the second laser source 6 and the second laser beam 7, along with the reflector 14, to preheat the powder bed 30 and/or the component to be repaired. The pre-heating power densities of the second laser beam 7 may be from about 10-100,000 watts/cm². By pre-heating the powder bed 30 and/or the component and/or heating the region near or adjacent to the melt region, the thermal gradient may be controlled to be substantially only in the direction normal to the powder bed. This will reduce cracking in materials that are sensitive to fast solidification cooling rates. Desirable grain growth that is normal to the layer surface may be achievable with planar cooling of a powder bed layer. This allows formation of a directionally solidified (DS) type grain structure or a single crystal structure with the build repair of an airfoil type structure. It should also be appreciated that the first laser source 4 and the first laser beam 5 may be controlled to heat the powder bed 30 to control the temperature and temperature gradient of the melt pool 32. Controlling the temperature and the temperature gradient of the melted region allows control over, for example, evaporation of the powder, the grain structure of the solidified layer, and/or the surface finish of the repair or component. Spatial control of the cooling rates in the 2D plane of each build layer allows the grain structure of each build layer to be controlled, as well as the grain structure in 35 as the build layers are added to form the build. Spatial control of the cooling rates in the 2D plane of each build layer also enables special treatments of the volumes that will form the surfaces of the 3D build or part. This allows control of the surface roughness and density (porosity) at the surface, which may improve mechanical properties of the part, for example fatigue.

The material in the powder bed 30 may be metal powder, for example, a nickel or cobalt or iron based superalloy. For example, the powder may be CoCrMo powder. The diameter of the particles of the powder bed may be from, for example, 10-100 µm, for example from 40-60µm. It should be appreciated that other materials, for example plastic, ceramic, or glass, may be used for the powder bed. Depending on the material in the powder bed, the power of the welding laser beam 5 may be from about 100 to about 1000 watts.

Slowed cooling rates lead to reduced stress within parts fabricated using DMI,M. Coaxially aligning the second laser beam 7 with the tip/tilt reflector 14 enables the second spot 26 to be projected around the melt pool 32 using the same set of scanning optics 12. As piezo-mirrors are greater than 10× faster than galvo scanners, custom heat patterns may be applied near the weld pool 32 which would not be possible using a second independent laser source due the inherently slower response of galvanometers.

The reflector 14 may be tilted by less than 0.25° to laterally offset the cooling spot 26 and can operate more than 10× faster than a galvo scan head. The high speed of the piezo-mirror may enable a single laser to be used for both powder fusion and controlled cooling. This configuration reduces component cost and provides new opportunities to generate a unique, local cooling pattern 34 around the melt pool 32. The technology can be implemented through commercial-off-the-shelf parts and adapted to various DMI,M machines.

Controlled cooling rates enable crack-free parts in alloys that cannot be conventionally processed via DMI,M, and have been proven by Applicants through platform heating. The technology disclosed herein is applicable to any commercial DMLM system and may reduce part stress, cracking, and distortion with minimal added system cost beyond a second laser source. Time between powder recoat can be reduced since the second laser is controlling cooling rate instead of depending on platform heaters to reach thermal equilibrium.

Although the present technology may be applicable to the repair function on components, it should be appreciated that the present technology is applicable for the additive manufacturing build of new make components.

## Claims

1. A method of controlling a cooling rate of a melt pool (32) of a powder bed, comprising:
directing a first laser beam on the powder bed to form the melt pool (32);
coaxially aligning a second laser beam with the first laser beam; and
laterally offsetting a focus spot of the second laser beam with respect to the melt pool (32), wherein the second laser beam heats but does not melt powder within the focus spot; and being **characterised by**
scanning the first laser beam and the laterally offset second laser beam relative to the powder bed at least in part by laterally offsetting the focus spot of the second laser beam in a scanned pattern (34) around the melt pool (32), and by
using fast tilt angle adjustments of a reflector (14) to generate the scanned pattern (34) around the melt pool (32) to create a customized heating pattern in a controlled cooling zone (36) to alter the cooling rate; wherein the reflector (14) is dynamically driven at several kHz; wherein
the scanned pattern (34) leads or follows the melt pool (32).

2. A method according to claim 1, wherein laterally offsetting the second laser beam comprises reflecting the second laser beam off of the reflector (14) tiltable about two axes.

3. A method according to claim 2, wherein coaxially aligning the second laser beam with the first laser beam comprises passing the first laser beam through a beam combiner and reflecting the second laser beam reflected from the reflector (14) off the beam combiner and passing the first and second laser beams through a shared optical system.

4. A method according to claim 3, wherein the first and second laser beams have different wavelengths and the beam combiner is a dichroic beam combiner, or wherein the first and second laser beams are of the same wavelength and have orthogonal polarizations, and the beam combiner is a polarization-dependent beam combiner.

5. A method according to claim 1, wherein the second laser beam trails the first laser beam.

6. A method according to claim 2, further comprising:
adjusting a power and/or a power density of at least one of the first laser beam or the second laser beam while tilting the reflector (14).

7. A method according to claim 2, wherein reflecting the second laser beam off of the reflector (14) comprises tilting the reflector (14) between 0.1° and 0.25°.

8. A direct metal laser melting manufacturing system, comprising:
at least one laser source to generate a first laser beam and a second laser beam;
a reflector (14) tiltable about two axes and configured to reflect the second laser beam;
a beam combiner to pass the first laser beam and reflect the second laser beam reflected from the reflector;
an optical system configured to coaxially align the first and second laser beams and direct the first and second laser beams to a powder bed, wherein the first laser beam forms a melt pool (32) in the powder bed; and being **characterised by**:
a controller to tilt the reflector (14) to laterally offset a focus spot of the second laser beam with respect to the melt pool (32), wherein the second laser beam heats but does not melt powder within the focus spot; and
a scanner configured to scan the first laser beam and the laterally offset second laser beam relative to the powder bed at least in part by laterally offsetting the focus spot of the second laser beam in a scanned pattern (34) around the melt pool (32), wherein the reflector (14) is configured to perform fast tilt angle adjustments by being dynamically driven at several kHz to generate the scanned pattern (34) around the melt pool (32) to create a customized heating pattern in a controlled cooling zone (36) to alter the cooling rate;
wherein the scanned pattern (34) leads or follows the melt pool (32).

9. A system according to claim 8, wherein the first and second laser beams have different wavelengths and the beam combiner is a dichroic beam combiner.

10. A system according to claim 8, wherein the first and second laser beams are of the same wavelength and have orthogonal polarizations, and the beam combiner is a polarization-dependent beam combiner.

11. A system according to claim 8, wherein the second laser beam trails the first laser beam.

12. A system according to claim 8, wherein the controller adjusts a power of at least one of the first laser beam or the second laser beam while tilting the reflector (14).

13. A system according to claim 8, wherein the controller tilts the reflector (14) between 0.1° and 0.25°.

14. A system according to claim 8, wherein the controller tilts the reflector (14) to offset the focus spot of the second laser beam up to 0.1 mm.

15. A system according to claim 8, wherein the reflector (14) comprises a piezo-actuated mirror, a MEMS mirror, an acousto-optical deflector, an electro-optical deflector, or a galvo scanner.

## Patentansprüche

1. Verfahren zum Steuern einer Kühlungsrate eines Schmelzbeckens (32) eines Pulverbetts, umfassend:
Richten eines ersten Laserstrahls auf das Pulverbett, um das Schmelzbecken (32) zu bilden;
koaxiales Ausrichten eines zweiten Laserstrahls mit dem ersten Laserstrahl; und
seitliches Versetzen eines Brennpunkts des zweiten Laserstrahls in Bezug auf das Schmelzbecken (32), wobei der zweite Laserstrahl Pulver innerhalb des Brennpunkts erhitzt, jedoch nicht schmelzt; und
wobei das Verfahren **gekennzeichnet ist durch**
Rastern des ersten Laserstrahls und des seitlich versetzten zweite Laserstrahl in Bezug auf das Pulverbett zumindest teilweise **durch** seitliches Versetzen des Brennpunkts des zweiten Laserstrahls in einem gerasterten Muster (34) um das Schmelzbecken (32), und
**durch**
Verwenden von schnellen Neigungswinkelanpassungen eines Reflektors (14), um das Rastermuster (34) um das Schmelzebecken (32) zu erzeugen, um ein individuelles Heizmuster in einer gesteuerten Kühlzone (36) zu erzeugen, um die Abkühlrate zu verändern; wobei der Reflektor (14) dynamisch mit mehreren kHz angesteuert wird;
wobei
das gerasterte Muster (34) dem Schmelzbecken (32) vorausgeht oder diesem nachfolgt.

2. Verfahren nach Anspruch 1, wobei das seitliche Versetzen des zweiten Laserstrahls das Reflektieren des zweiten Laserstrahls von dem um zwei Achsen kippbaren Reflektor (14) umfasst.

3. Verfahren nach Anspruch 1, wobei das koaxiale Ausrichten des zweiten Laserstrahls mit dem ersten Laserstrahl das Hindurchleiten des ersten Laserstrahls durch einen Strahlkombinierer und das Reflektieren des zweiten, von dem Reflektor (14) reflektierten Laserstrahls an dem Strahlkombinierer und das Hindurchleiten des ersten und zweiten Laserstrahls durch ein gemeinsames optisches System umfasst.

4. Verfahren nach Anspruch 3, wobei der erste und zweite Laserstrahl unterschiedliche Wellenlängen haben und der Strahlkombinierer ein dichroitischer Strahlkombinierer ist, oder wobei der erste und der zweite Laserstrahl die gleiche Wellenlänge und orthogonale Polarisierungen haben, und der Strahlkombinierer ein polarisationsabhängiger Strahlkombinierer ist.

5. Verfahren nach Anspruch 1, wobei der zweite Laserstrahl dem ersten Laserstrahl nachgeführt wird.

6. Verfahren nach Anspruch 2, ferner umfassend:
Anpassen einer Leistung und/oder einer Leistungsdichte des ersten Laserstrahls und/oder des zweiten Laserstrahls unter Verkippen des Reflektors (14).

7. Verfahren nach Anspruch 2, wobei das Reflektieren des zweiten Laserstrahls an dem Reflektor (14) das Verkippen des Lasers (14) zwischen 0,1 ° und 0,25° umfasst.

8. System zur Herstellung mittels direktem Laserschmelzen, aufweisend:
zumindest eine Laserquelle zum Erzeugen eines ersten Laserstrahls und eines zweiten Laserstrahls;
einen um zwei Achsen verkippbaren Reflektor (14), der konfiguriert ist, den zweiten Laserstrahl zu reflektieren;
einen Strahlkombinierer, um den ersten Laserstrahl durchzulassen und den zweiten, von dem Reflektor reflektierten Laserstrahl zu reflektieren;
ein optisches System, das konfiguriert ist, den ersten und zweiten Laserstrahl koaxial auf ein Pulverbett auszurichten, wobei der erste Laserstrahl ein Schmelzbecken (32) in dem Pulverbett bildet, und **gekennzeichnet durch**:
einen Controller, um den Reflektor (14) seitlich versetzt eines Brennpunkts des zweiten Laserstrahls in Bezug auf das Schmelzbecken (32) zu verkippen, wobei der zweite Laserstrahl Pulver innerhalb des Brennpunkts erhitzt, jedoch nicht schmilzt; und
einen Scanner, der konfiguriert ist, den ersten Laserstrahl und den seitlich versetzten zweiten Laserstrahl in Bezug auf das Pulverbett zu rastern, zumindest teilweise **durch** seitliches Versetzen des Brennpunkts des zweiten Laserstrahls in einem gerasterten Muster (34) um das Schmelzbecken (32), wobei
der Reflektor (14) konfiguriert ist, schnelle Neigungswinkelanpassungen vorzunehmen, indem er dynamisch mit mehreren kHz angesteuert wird, um das gerasterte Muster (34) um das Schmelzbecken (32) zu erzeugen, um ein individuelles Heizmuster in einer kontrollierten Kühlzone (36) zu erzeugen, um die Abkühlgeschwindigkeit zu verändern;
wobei das gerasterte Muster (34) dem Schmelzbecken (32) vorausgeht oder nachgeführt wird.

9. System nach Anspruch 8, wobei der erste und der zweite Laserstrahl unterschiedliche Wellenlängen haben und der Strahlkombinierer ein dichroitischer Strahlkombinierer ist.

10. System nach Anspruch 8, wobei der erste und der zweite Laserstrahl die gleiche Wellenlänge und orthogonale Polarisierungen haben, und der Strahlkombinierer ein polarisationsabhängiger Strahlkombinierer ist.

11. System nach Anspruch 8, wobei der zweite Laserstrahl dem ersten Laserstrahl nachgeführt wird.

12. System nach Anspruch 8, wobei der Controller eine Leistung des ersten Laserstrahls und/oder des zweiten Laserstrahls anpasst, während der Reflektor (14) verkippt wird.

13. System nach Anspruch 8, wobei der Controller den Reflektor (14) zwischen 0,1° und 0,25° verkippt.

14. System nach Anspruch 8, wobei der Controller den Reflektor (14) verkippt, um den Brennpunkt des zweiten Laserstrahls um bis zu 0,1 mm zu versetzen.

15. System nach Anspruch 8, wobei der Reflektor (14) einen piezobetätigten Spiegel, einen MEMS-Spiegel, einen akustooptischen Deflektor, einen elektrooptischen Deflektor oder einen Galvoscanner aufweist.

## Revendications

1. Procédé de régulation d'une vitesse de refroidissement d'un bain de fusion (32) d'un lit de poudre, le procédé comprenant :
le guidage d'un premier faisceau laser sur le lit de poudre afin de former le bain de fusion (32) ;
l'alignement coaxial d'un second faisceau laser avec le premier faisceau laser ; et
le décalage latéral d'un point focal du second faisceau laser par rapport au bain de fusion (32), le second faisceau laser chauffant, mais ne fondant pas, la poudre à l'intérieur du point focal ;
et étant **caractérisé**
**par** le balayage du premier faisceau laser et du second faisceau laser décalé latéralement par rapport au lit de poudre, au moins en partie, au moyen du décalage latérale du point focal du second faisceau laser selon un motif balayé (34) autour du bain de fusion (32), et
par l'utilisation de réglages rapides de l'angle d'inclination d'un réflecteur (14) afin de produire le motif balayé (34) autour du bain de fusion (32) en vue de créer un motif de chauffage personnalisé dans une zone à refroidissement régulé (36), pour altérer la vitesse de refroidissement ;
le réflecteur (14) étant entraîné de manière dynamique à plusieurs kHz ;
le motif balayé (34) menant au bain de fusion (32) ou suivant ledit bain.

2. Un procédé selon la revendication 1, dans lequel le décalage latéral du second faisceau laser comprend la réflexion du second faisceau laser à partir du réflecteur (14) inclinable autour de deux axes.

3. Un procédé selon la revendication 2, dans lequel l'alignement coaxial du second faisceau laser avec le premier faisceau laser comprend le passage du premier faisceau laser à travers un mélangeur de faisceaux et la réflexion du second faisceau laser réfléchi à partir du réflecteur (14) hors du mélangeur de faisceaux et le passage des premier et second faisceaux laser à travers un système optique partagé.

4. Un procédé selon la revendication 3, dans lequel les premier et second faisceaux laser présentent différentes longueurs d'onde et le mélangeur de faisceaux est un mélangeur de faisceaux dichroïque, ou dans lequel les premier et second faisceaux laser présentent la même longueur d'onde et des polarisations orthogonales, et le mélangeur de faisceaux est un mélangeur de faisceaux dépendant de la polarisation.

5. Un procédé selon la revendication 1, dans lequel le second faisceau laser suit le premier faisceau laser.

6. Un procédé selon la revendication 2, comprenant en outre :
le réglage d'une puissance et/ou d'une densité de puissance du premier faisceau laser et/ou du second faisceau laser pendant l'inclination du réflecteur (14).

7. Un procédé selon la revendication 2, dans lequel la réflexion du second faisceau laser à partir du réflecteur (14) comprend l'inclination du réflecteur (14) entre 0,1° et 0,25°.

8. Système de fabrication par fusion laser directe de métal, le système comprenant :
au moins une source de laser destinée à produire un premier faisceau laser et un second faisceau laser ;
un réflecteur (14) inclinable autour de deux axes et conçu pour réfléchir le second faisceau laser ;
un mélangeur de faisceaux destiné à faire passer le premier faisceau laser et à réfléchir le second faisceau laser réfléchi à partir du réflecteur ;
un système optique conçu pour aligner de manière coaxiale les premier et second faisceaux laser et pour guider les premier et second faisceaux laser vers un lit de poudre, le premier faisceau laser formant un bain de fusion (32) dans le lit de poudre ;
et étant **caractérisé par** :
un régulateur destiné à incliner le réflecteur (14) afin de décaler latéralement un point focal du second faisceau laser par rapport au bain de fusion (32), le second faisceau laser chauffant, mais ne fondant pas, la poudre à l'intérieur du point focal ; et
un dispositif de balayage conçu pour balayer le premier faisceau laser et le second faisceau laser décalé latéralement par rapport au lit de poudre, au moins en partie, au moyen du décalage latérale du point focal du second faisceau laser selon un motif balayé (34) autour du bain de fusion (32),
le réflecteur (14) étant conçu pour effectuer des réglages rapides de l'angle d'inclination au moyen de son entraînement dynamique à plusieurs kHz afin de produire le motif balayé (34) autour du bain de fusion (32) en vue de créer un motif de chauffage personnalisé dans une zone à refroidissement régulée (36) pour altérer la vitesse de refroidissement ;
le motif balayé (34) menant au bain de fusion (32) ou suivant ledit bain.

9. Un système selon la revendication 8, dans lequel les premier et second faisceaux laser présentent différentes longueurs d'onde et le mélangeur de faisceaux est un mélangeur de faisceaux dichroïque.

10. Un système selon la revendication 8, dans lequel les premier et second faisceaux laser présentent la même longueur d'onde et des polarisations orthogonales, et le mélangeur de faisceaux est un mélangeur de faisceaux dépendant de la polarisation.

11. Un système selon la revendication 8, dans lequel le second faisceau laser suit le premier faisceau laser.

12. Un système selon la revendication 8, dans lequel le régulateur règle une puissance du premier faisceau laser et/ou du second faisceau laser pendant l'inclination du réflecteur (14).

13. Un système selon la revendication 8, dans lequel le régulateur incline le réflecteur (14) entre 0,1° et 0,25°.

14. Un système selon la revendication 8, dans lequel le régulateur incline le réflecteur (14) afin de décaler le point focal du second faisceau laser jusqu'à 0,1 mm.

15. Un système selon la revendication 8, dans lequel le réflecteur (14) comprend un miroir à actionnement piézoélectrique, un miroir MEMS, un déflecteur acousto-optique, un déflecteur électro-optique ou un dispositif de balayage Galvo.
